Europäisches Patentamt

(19) European Patent Office

Office européen des brevets

(11) Numéro de publication: **0 207 334**

**B1**

(12) **FASCICULE DE BREVET EUROPEEN**

(45) Date de publication du fascicule du brevet: **16.05.90**

(51) Int. Cl.⁵: **A 47 J 17/16, A 23 N 7/02**

(21) Numéro de dépôt: **86107938.2**

(22) Date de dépôt: **11.06.86**

(54) Eplucheuse de fruits et légumes.

(30) Priorité: **26.06.85 FR 8509737**

(43) Date de publication de la demande:
**07.01.87 Bulletin 87/02**

(45) Mention de la délivrance du brevet:
**16.05.90 Bulletin 90/20**

(84) Etats contractants désignés:
**AT BE CH DE FR GB IT LI LU NL SE**

(56) Documents cités:
**FR-A-1 248 668**
**FR-A-1 481 314**
**FR-A-1 585 006**
**US-A-3 113 603**
**US-A-3 680 614**

(73) Titulaire: **CAILLIOT, Serge**
**Le Manoir de Carabillon**
**Cordey, F-14700 Falaise (FR)**

(72) Inventeur: **CAILLIOT, Serge**
**Le Manoir de Carabillon**
**Cordey, F-14700 Falaise (FR)**

(74) Mandataire: **Casalonga, Axel et al**
**BUREAU D.A. CASALONGA - JOSSE**
**Morassistrasse 8**
**D-8000 München 5 (DE)**

Courier Press, Leamington Spa, England.

EP 0 207 334 B1

**Description**

L'invention concerne les appareils destinés à peler ou éplucher des produits divers, tels que fruits ou légumes, c'est-à-dire à en retirer la peau, enveloppe ou écorce qui désignée ci-aprés par peau.

Pour l'épluchage des fruits, il est connu d'utiliser le principe du tour, avec un ou plusieurs outils fixes ou rotatifs qui possèdent au moins une partie tranchante et qui tentent d'imiter l'épluchage manuel, c'est-à-dire de détacher une pelure continue, comme c'est le cas par exemple des dispositifs décrits dans les documents FR—A—1 585 006, US—A—3 680 614, et FR—A—1 481 314. Pour un appareil automatique, la présence d'une telle pelure continue est un grave inconvénient par suite de sa tendance à bourrer et à gêner l'action de l'outil. Pour y remédier, il est connu, d'après le document US—A—3 113 603 d'utiliser un couteau rotatif à tranchant cylindrique combiné avec un disque qui soutient le tranchant cylindrique et qui est muni de fenêtres affûtées dans le plan du disque, de manière à recouper transversalement le ruban de pelure en tronçons plus réduits facilitant son évacuation. Il est connu également, d'après le document FR—A—1 248 668, décrivant un appareil conforme au préambule de la revendication 1, d'utiliser un couteau rotatif en forme de fraise très plate comportant un grand nombre de dents tranchantes réparties sur un diamètre important afin de réaliser de petits copeaux dont l'évacuation est laissée au hasard.

Pour l'épluchage des légumes, les dispositifs précédents ne conviennent pas en raison d'une-part, de l'usure rapide des arêtes tranchantes, notamment avec des produits à peau terreuse, et d'autre part, des formes irrégulières des légumes tels que les pommes de terre, et des différences de dureté de leur chair, telle que la différence qui existe entre un carotte et une pomme de terre. Pour cette raison, on utilise de préférence les meules ou les dispositifs abrasifs qui traitent les légumes en vrac sous courant d'eau, mais avec des pertes de poids à l'épluchage très importantes, ou encore pour des cas tout à fait particuliers tels que les pommes de terre, des couteaux rasants qui sont très fragiles et présentent à nouveau l'inconvénient du bourrage de la pelure.

Le but de l'invention est d'éliminer les inconvénients précédents en réalisant un dispositif qui convient à la fois et sans adaptation particulière à tous les types les plus courants de fruits et de légumes, qui élimine le problème du bourrage et de l'évacuation des pelures, et qui élimine également le problème d'usure des tranchants ainsi que les difficultés dues aux irrégularités de forme.

L'invention est basée sur l'utilisation, dans une éplucheuse conforme au préambule de la revendication 1, d'un outil du type toupie comportant:

une partie de révolution de petit diamètre, apte à venir pénétrer même dans les parties concaves des formes irrégulières du produit et susceptible de venir au contact de celui ci

une ou plusieurs dents tranchantes ou non, formant des saillies d'un depassement déterminé au-delà de cette partie de révolution, le nombre de dents étant de préférence égal à deux

ledit moyen d'entraînement de la toupie étant apte à entrainer celle-ci en rotation autour de son axe à grande vitesse de telle manière que la vitesse tangentielle des saillies soit supérieure à 8 m/s, et de préférence voisine de 20 m/s, de manière à projeter constamment au loin les particules de peau détachées, au fur et à mesure que la toupie explore la surface du produit selon des spires parallèles,

ledit moyen d'entraînement étant apte à entraîner la toupie dansun sens de rotation relativement au mouvement d'exploration tel que les saillies attaquent la peau du produit par-dessous en partant de la spire voisine déjà pelée.

Les caractéristiques de cette toupie, notamment sa vitesse de rotation élevée, présentent en outre l'intérêt de ne mettre en jeu que des forces très faibles et régulières, autorisant en particulier

de ne nécessiter qu'un très faible couple d'entraînement de la toupie, par moteur indépendant à entraînement direct ou par transmission,

de monter cette toupie d'une maînière sensitive, de manière que sa surface de révolution s'appuie sur la surface du produit, mais avec un très faible effort, ou couple de rappel lorsque l'ensemble est monté basculant,

enfin, de ne nécessiter qu'un faible couple d'entraînement en rotation du produit et qu'une faible force de chariotage pour le dispositif destiné à produire le mouvement relatif d'exploration systématique à spires parallèles. En particulier, le produit peut être entraîné en rotation et en translation à l'aide d'une simple broche en forme de tire-bouchon, permettant un vissage et un dévissage directs dans le produit en utilisant seulement une fraction de course de ces mêmes mouvements de translation et de rotation.

Selon une particularité importante de l'invention, l'axe de la toupie est monté dans des paliers de manière à osciller autour d'un axe d'articulation perpendiculaire, cet axe d'articulation étant à son tour monté dans les paliers d'une cage en forme de chape susceptible de tourner autour d'un axe perpendiculaire, ou encore orthogonal et excentré par rapport au précédent, de manière que

en début d'opération, l'axe d'oscillation fasse un angle voisin de 45° avec la broche portant le produit dans un sens tel que la recontre de la toupie avec le produit provoque automatiquement la fuite oblique de la toupie, et que

en fin d'opération, cet axe d'articulation fasse avec cette même broche un angle de sens opposé, et de préférence voisin de 20°.

Cette disposition est destinée à assurer un fonctionnement automatique et un pas apparent sensiblement constant entre les spires.

D'autres particularités de l'invention apparaîtront dans la description qui va suivre d'un mode de réalisation pris comme exemple et représenté sur le dessin annexé, sur lequel:

la figure 1 est une élévation vue de face des parties essentielles du dispositif;

la figure 2 est une couple axiale transversale selon II—II de la figure 1;

la figure 3 est une vue de dessus du dispositif;

la figure 4 est une coupe horizontale selon IV—IV de la figure 1;

la figure 5 est une vue horizontale partielle selon V de la figure 3; et

la figure 6 est une coupe horizontale partielle selon VI—VI de la figure 3.

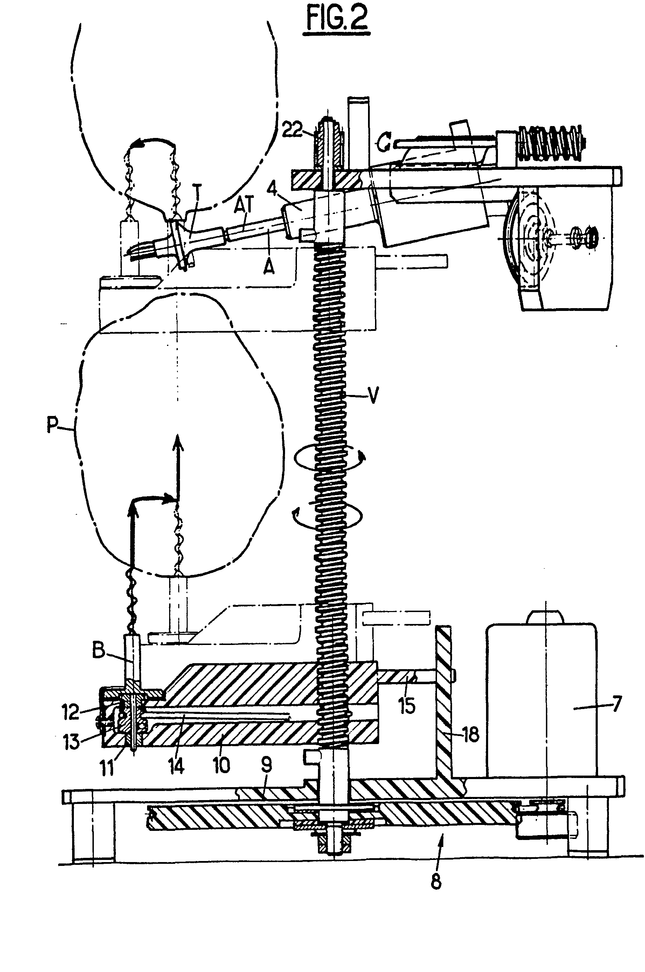

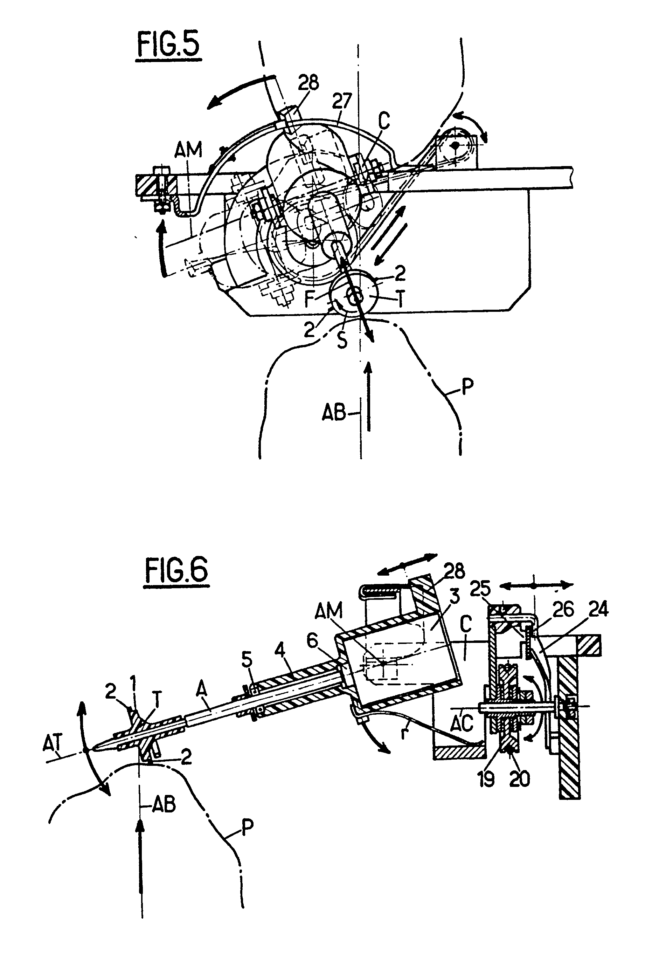

On voit, notamment sur les figures 2 et 6, la toupie T selon l'invention qui comporte une surface 1 de révolution, dans ce cas cylindrique, susceptible de venir s'appuyer sur la surface du produit P à éplucher de manière à limiter la pénétration, cette surface ayant un très petit diamètre, par exemple de l'ordre de 20 mm. Par ailleurs, la toupie comporte un très petit nombre de saillies 2, par exemple deux pour assurer l'équilibrage en rotation. La toupie T avec sa surface d'appui 1 peut par exemple être en matière plastique moulée, tandis que les saillies 2 sont avantageusement constituées par la partie dépassante d'une lame métallique qui peut être affûtée ou non. La hauteur de dépassement de chaque saillie au-delà de la surface 1 définit la profondeur de passe maximum et peut éventuellement être modifiée en disposant de plusieurs types de toupie.

Selon une caractéristique essentielle de l'invention, cette toupie tourne autour de son axe AT à une très grande vitesse de rotation, par exemple 20 000 t/minute, de manière que la vitesse tangentielle des saillies 2 soit au moins de l'ordre de 20 m/s, ou en tout cas supérieure à 8 m/s. Cette vitesse de rotation élevée ne nécessite par contre qu'un couple relativement faible, de sorte qu'elle peut aisément être assurée à l'aide d'un petit moteur 3 à entraînement direct placé à l'autre extrémité de l'arbe A d'axe AT. Toutefois, tout autre type de transmission, par exemple par courroie, ou d'entraînement, par exemple par turbine, serait utilisable.

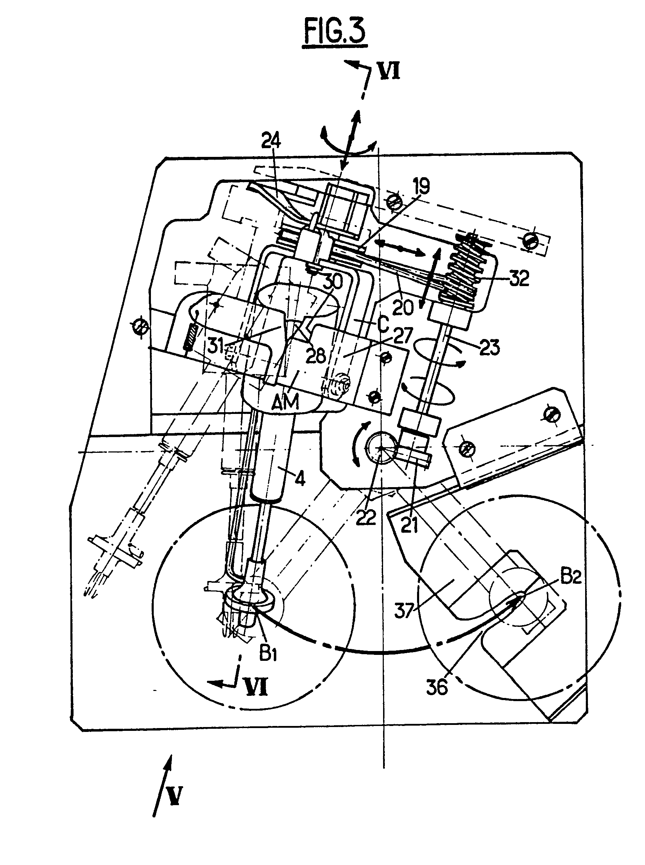

Conformément à l'invention, l'ensemble 4 comportant les paliers 5 et 6 de l'arbre A, et éventuellement le moteur 3 comme dans le case présent, ou l'organe récepteur de la transmission, est monté oscillant autour d'un axe d'oscillation AM perpendiculaire à AT. Cet axe AM est par exemple porté par une cage C en forme de chape, visible notamment sur les figures 3, 5 et 6, et montée elle-même tournante autour d'une axe AC qui est perpendiculaire à l'axe d'articulation moteur AM, et de préférence excentré, c'est-à-dire non concourant avec le précédent, comme on le voit en particulier sur la figure 6. En même temps, un couple de rappel, exercé par exemple par un ressort r, produit une rotation de l'ensemble 4 autour de cet axe pour produire au niveau de la toupie T un faible effort d'application de celle-ci sur le produit P, de l'ordre de 0,3 N ou au plus 0,5 N. En effet, la grande vitesse de rotation de la toupie ne nécessite pas une forte pression sur le produit.

Le produit P lui-même, légume ou fruit, peut être entraîné d'un mouvement hélicoïdal pour assurer l'exploration systématique de sa surface par la toupie T, sans nécessiter non plus de grand couple d'entraînement en rotation ni de grande force d'entraînement en translation. Dans l'exemple représenté, ce double entraînement du produit P est assuré par une courte broche B dont l'extrémité est pointue et taillée en forme de vis à grand pas à la manière d'un tire-bouchon, de façon à pouvoir se visser directement dans une faible longueur du produit correspondant à la plus petite dimension en longueur des produits traités. De cette manière, la simple rotation de la broche B sur elle-même suffit pour assurer la pénétration de la broche dans le produit P, par exemple immobilisée momentanément à la main, puis dans un deuxième temps, l'entraînement en rotation et en translation de ce produit.

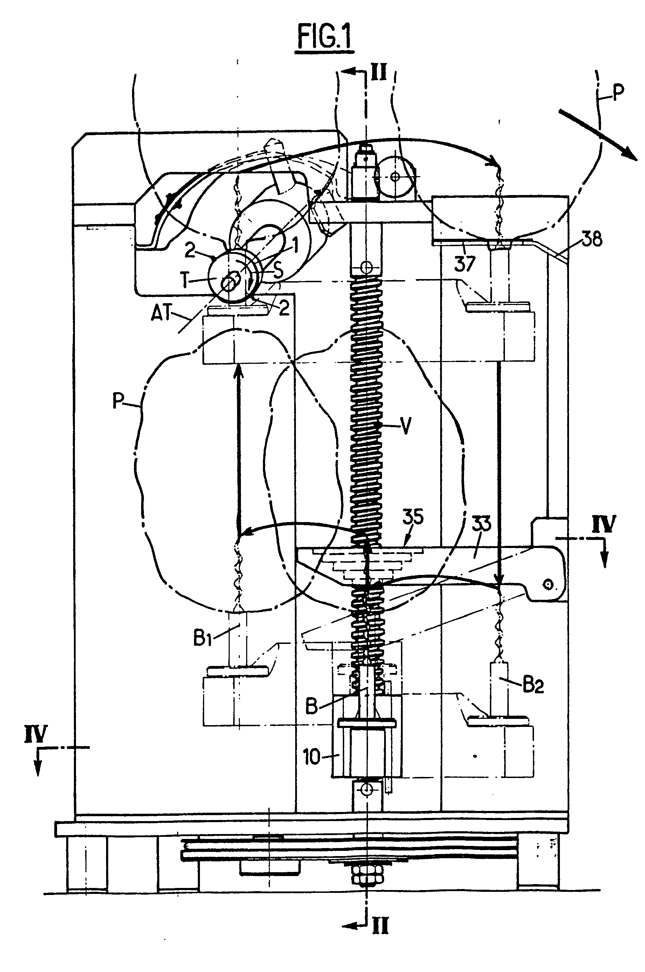

Dans l'exemple représenté, on dispose pour cela d'une vis verticale V, visible sur les figures 1 à 4, et qui est entraînée en rotation lente à partir d'une deuxième moteur 7 dans l'exemple représenté, par l'intermédiaire d'un démultiplication 8 appropriée située sous la base 9 de l'appareil, et entraînant l'extrémité inférieure de la vis V, de préférence par friction.

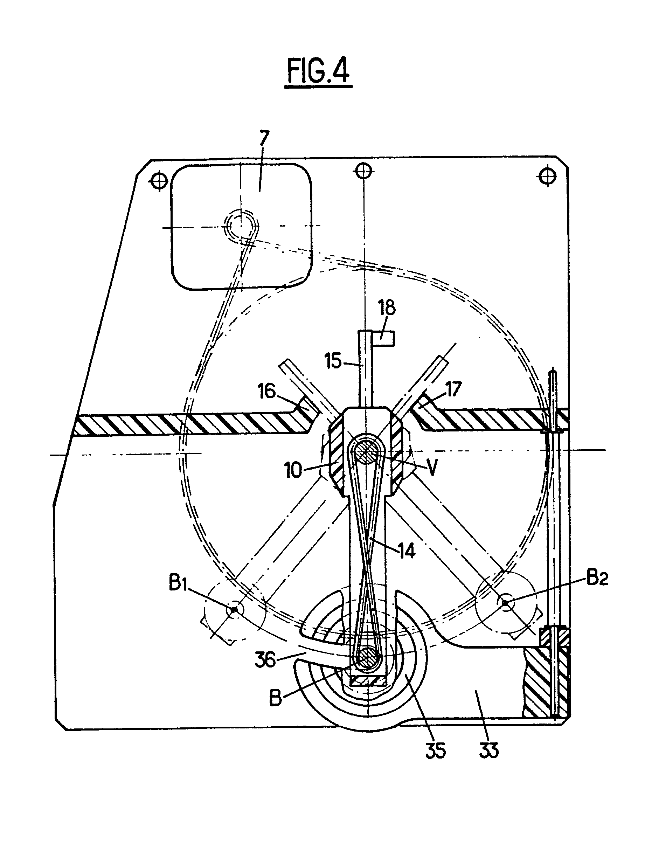

Sur cette vis V est monté un chariot 10, visible en particulier sur les figures 2 et 4 et qui constitue un écrou susceptible de se déplacer en translation le long de la vis à la faveur de la rotation de celle-ci, dans un sens et dans l'autre. Ce cheriot 10 affecte la forme d'un bras dont l'extrémité porte les paliers 11 et 12 de la base de la broche B précédente. Une transmission appropriée permet de trasmettre le mouvement de rotation de la vis V à l'a broche B. Dans l'exemple représenté, cette transmission a lieu à l'aide d'une poulie 13, calée sur la broche B entre les paliers 11 et 12, et d'une courroie 14 qui passe directement entre deux filets de la vis V, ce qui assure tout à la fois l'entraînement par friction de la courroie et son cheminement longitudinal dans les mêmes conditions que le chariot 10. Toutefois, tout autre mode de transmission serait utilisable. Le rapport de transmission peut être égal à un ou différent de un.

En raison des frottements inévitables entre la vis V et le chariot 10, ainsi qu'entre la broche B et ses paliers 11 et 12 dont le couple est répercuté sur la vis par la courroie 14, et également de l'inertie et de la résistance à l'entraînement du produit P qui s'opposent au mouvement, lorsque la vis V est entraînée en rotation, le chariot 10 a tout naturellement tendance à tourner avec cette vis plutôt que de se déplacer en translation sur celle-ci. Pour assurer cette translation, on munit donc le chariot 10 d'un prolongement arrière 15 susceptible de venir buter et glisser verticalement sur une butée 16 solidaire du bâti de l'appareil lorsque la vis tourne dans le sens inverse des aiguilles d'une montre vue de dessus, et à venir de même buter et glisser verticalement contre une autre butée 17 solidaire du bâti lorsque la vis tourne dans le sens des aiguilles d'une montre.

En outre, dans ce dernier cas, il est prévu également une butée intermédiaire 18 qui, comme on le voit sur la figure 2, ne s'étend que sur une faible partie de la hauteur.

En particulier, lorsque le prolongement 15 du chariot se trouve en butée sur la butée 17, la vis tournant dans le sens des aiguilles d'une montre, la broche B se trouve en position $B_1$ à la gauche de la figure 4, en desous de la toupie T et sensiblement à l'aplomb de celle-ci. La rotation lente de la vis V dans le sens indiqué produit donc l'avancement hélicoïdal vers le haut du produit P avec un pas correspondant exactement à celui de la vis V, divisé par le rapport de transmission indiqué ci-dessus, s'il y a lieu.

En même temps, selon l'invention, la cage C est positionnée au départ de telle manière qui l'axe d'articulation moteur AM soit incliné sensiblement à 45° par rapport à l'axe AB de la broche B, et dans un sens tel que la recontre de la toupie T avec le sommet du produit P produise la fuite oblique de la toupie dans le sens F qui l'éloigne de l'axe AB, comme représenté sur la figure 5. Ensuite, conformément à l'invention, l'axe AM doit tourner lentement autour de l'axe de cage AC jusqu'à dépasser la verticale et atteindre une inclinaison semblable et de sens inverse. Toutefois, cette deuxième inclinaison peut s'arrêter à une vingtaine de degrés environ par rapport à la verticale.

Pendant ce mouvement, la toupie explore la surface entière du produit P en traçant des sillons parallèles dont le pas apparent est sensiblement égal à celui indiqué ci-dessus, le sens de rotation de la toupie T, représenté par la flèche S sur les figures 1 et 5, étant choisi de telle manière que la toupie attaque toujours la peau du produit P par en dessous en partant de la spire précédente déjà pelée. Ceci est particulièrement important pour les produits terreux, tels que pommes de terre ou carottes, pour éviter l'usure exagérée des saillies 2 et pour laisser le produit pelé P parfaitement propre.

Ce mouvement de rotation de la cage C autour de l'axe AC peut être produit par tout moyen approprié, continu ou discontinu, mais il peut être obtenu d'une manière très simple dans l'exemple représenté à l'aide d'une poulie 19 entraînant la cage C par friction et entraînée elle-même par une courroie 20 à partir de la vis V et par l'intermédiaire d'un couple à roue 21 et vis tangente 22, cette dernière étant portée en bout de la vis V. L'arbe 23 entraîné par la roue 21 entraîne par son autre extrémité la courroie 20.

Lorsque la toupie T attaque la calotte supérieure du produit P, il y a intérêt à opérer bien au centre, selon l'axe AB, alors que lorsque la toupie termine l'épluchage du produit P au voisinage de la broche B, il y a intérêt à décaler la position de cette toupie par rapport à l'axe AB de cette broche de la quantité juste suffisante pour éviter la rencontre de la toupie avec la broche B ou le chariot 10. Ceci peut être obtenu très simplement dans le cas de l'invention en faisant coulisser l'ensemble de la cage C et de la poulie 19 le long de son axe AC, en prévoyant pour cela une came évolutive 24 prise entre un bossage 25 et un doigt 26 solidaires de la cage pour assurer, par ce double guidage, le recul progressif de l'ensemble et son retour en position initiale dans le mouvement inverse.

Par ailleurs, la longueur des produits P pouvant être très variable, le moment auquel doit commencer la rotation de la cage C autour de son axe AC doit être retardé jusqu'au contact effectif de la toupie T avec le produit P. Pour cela, il est prévu un guide sensiblement cylindrique 27, visible en particulier sur les figures 1, 3, 5 et 6, et sur le bord duquel vient porter un doigt de butée 28 limitant la course de basculement de l'ensemble 4 autour de l'axe AM. Dans la position de départ, ce doigt 28 pénètre au fond d'une encoche 30 du guide 27 et vient buter contre une butée 31 escamotable, qui s'oppose à la rotation de la cage C jusqu'au moment où, la toupie T ayant rencontré le produit et ayant été soulevé par celui-ci dans le sens F, le doigt 28 échappe de la butée 31 qui définissait la position de départ et commence sa rotation lente en fonction de l'entraînement indiqué.

Compte tenu du recul progressif de la poulie 19 comme exposé plus haut, la poulie d'entraînement solidaire de l'arbe 23 peut avantageusement être remplacée par un tronçon de vis hélicoïdale 32 comme dans l'exemple représenté, mais tout autre mode de transmission serait naturellement applicable. Naturellement, la position angulaire de la cage C en fin d'épluchage est définie par une simple butée angulaire opérant au niveau de la rampe 24 ou du guide 27.

Le dispositif se complète avantageusement par une pelle de centrage 33, visible sur les figures 1 et 4 et articulée autour d'un axe 34 solidaire du bâti de l'appareil. Cette pelle comporte une partie concave 35 servant à centrer la base du produit à l'aplomb de la broche B lorsque celle-ci se trouve en position médiane, définie par la butée du prolongement arrière 15 du chariot 10 sur la butée intermédiaire 18. On voit d'autre part que la pelle 33 comporte une encoche de dégagement 36 permettant le passage de la base de la broche B lors de la rotation du chariot 10 de la position médiane à la position $B_1$ sur la figure 4.

On peut suivre le mouvement générale de l'appareil sur les figures, notamment sur la figure 1. On suppose, au départ, que l'appareil est arrêté dans la position représentée en traits pleins, c'est-à-dire avec le chariot 10 en position médiane et à l'extrémité inférieure de la course de la vis V. L'usager place alors à la main un produit P dans l'empreinte de centrage 35 et actionne une commande manuelle qui met en route le moteur 7. Cette commande manuelle peut simplement être constituée par un contact non représenté actionné par le début de déplacement de la pelle 33 vers le bas, déplacement durant lequel le produit vient s'appuyer par sa base sur la pointe de la broche B. Due fait de la rotation de la vis dans le sens des aiguilles d'une montre, et par l'intervention de la butée arrière 18, le chariot 10 monte verticalement, toujours en position

médiane, tandis que la broche B est entraînée dans le sens inverse des aiguilles d'une montre par la transmission 14 indiquée, ce qui produit automatiquement sa montée en même temps que son vissage dans le produit. Si le pas de la partie en tire-bouchon de la broche Be est sensiblement égal au pas de la vis V, compte tenu du rapport de transmission éventuel entre les deux axes, l'ascension de la broche se fait sans déplacement axial du produit, lequel est naturellement immobilisé en rotation par la main de l'opérateur.

Au bout d'une course déterminée du chariot 10, détectée par un contact d'arrêt approprié non représenté, la broche B s'est vissée exactement de toute sa longueur, et en même temps le prolongement arrière 15 du chariot 10 est venu à l'extrémité supérieure de la butée 18, sans toutefois échapper de celle-ci. Le moteur 7 est alors arrêté par ce contact d'arrêt.

Aprés avoir retiré sa main, l'opérateur actionne alors une autre commande manuelle qui peut par exemple être constituée par un supplément de course de la pelle 33, et un autre contact remet le moteur 7 en route, toujours dans le même sens, en court-circuitant par exemple le contact d'arrêt précédent. Dès que le chariot commence à monter, son prolongement arrière 15 échappe alors de la butée intermédiaire 18, de sorte que l'ensemble du chariot, 10, de la broche B, et du produit P porté par celle-ci, se met à tourner avec la vis jusqu'à intervention de la butée 17 comme exposé plus haut.

Ensuite, toujours dans le même mouvement, le produit P entame son mouvement hélicoïdal vers le haut. En même temps, la toupie T tourne dans le sens indiqué, et la cage C, entraînée par friction par la poulie 19, reste néanmoins en position immobile, bloquée par le doigt 28 qui appuie sur la butée 31. Au bout d'un certain nombre de tours, qui dépend de la longueur du produit P, le sommet de celui-ci vient recontrer la toupie T, ce qui produit l'usinage d'une spirale d'épluchage sur sa calotte d'extrémité, en même temps que le dégagement du doigt 28 permettant la rotation ultérieure lente de la cage C autour de son axe AC comme exposé plus haut.

L'ascension du produit se continuant, la toupie explore sa surface en y traçant des spires qui passent d'une spirale quasiment plane à des spires quasiment hélicoïdales, pour se terminer à l'autre extrémité à nouveau par une spirale sensiblement plane, toutes ces spires ayant un pas apparent relativement constant grâce à la variation progressive de l'inclinaison de l'axe AM comme indiqué plus haut. En même temps, comme on l'a vu, le recul progressif de la cage C permet à la toupie T d'éviter de recontrer la broche B, cette dernière comportant, par ailleurs, une partie non filetée à sa base d'une longueur sensiblement égale au diamètre de cette toupie pour éviter la recontre de cette dernière avec le chariot.

Le retour de la toupie au voisinage de l'axe AB s'opère pour la position du chariot 10 correspondant au sommet de sa course, position indépendante de la longueur du produit P et qui est déterminée par un contact de fin de course supérieure non représenté.

L'actionnement de ce contact produit simplement l'inversion de marche du moteur 7, le moteur 3, s'il y a lieu, pouvant indifféremment continuer dans le même sens, ou être arrêté, ou inverser sa marche. Cette inversion de sens de rotation de la vis V produit alors l'entraînement du chariot de la gauche vers la droite de la figure 1 jusqu'à la position représentée par $B_2$ sur la figure 4. Dans cette position, et comme représenté sur la figure 3, la base non filetée de la broche B vient s'engager dans l'échancrure 36 d'une poste d'évacuation constitué par une surface 37 horizontale ou inclinée, suivie d'une rampe 38 ou d'une goulotte d'évacuation.

Lorsque la broche B est à l'aplomb de cette nouvelle position, c'est-à-dire lorsque le prolongement arrière 15 du chariot 10 recontre la première butée 16, la broche B entame un mouvement hélicoïdal vers le bas dans le sens du dévissage.

Le produit P est donc lui-même entraîné librement de ce mouvement halicoïdal jusqu'à ce que sa base vienne recontrer la surface d'appui 37 du poste d'évacuation. Ceci a pour effet de l'immobiliser par frottement, permettant, ainsi le dévissage de la broche B qui, une fois débarrassée du produit P, continue seule son mouvement descendant jusqu'à l'extrémité inférieure de la course.

Là, un autre contact de fin de course inférieure, non représenté, produit à nouveau une inversion du sens de marche du moteur 7, ce qui entraîne l'ensemble du chariot 10 dans la position médiane B sur la figure 4, son prolongement arrière 15 venant en butée sur la butée intermédiaire 18. Un autre contact électrique non représenté, détectant l'arrivée de ce prolongement arrière 15 contre la butée 18 et en position basse, provoque l'arrêt du moteur 7, et éventuellement du moteur 3, l'appareil se retrouvant ainsi dans la position initiale du début de cycle. Naturellement, lors de ce dernier mouvement, la pointe supérieure de la broche B passe juste sous la pelle 33 pour venir se placer en dessous du fond de l'échancrure 36.

En réalité, tout l'ensemble du cycle d'épluchage qui vient d'être décrit s'enchaîne automatiquement et dure à peine un dizaine de seconds, ce temps étant utilisé par l'opérateur pour saisir un autre produit et le placer à nouveau dans la pelle de centrage.

Pendant tout ce cycle d'épluchage, les particules de peau du produit P, finement déchiquetées par les saillies 2 de la toupie T, sont projetées tangentiellement vers une zone d'étendue réduit où leur accumulation ne risque en rien de gêner la marche de l'appareil. Naturellement, cette zone est de préférence ménagée en forme de réceptacle amovible, non représenté, permettant son nettoyage. Des dispositifs de protection classique, non représentés dans un but de simplification, permettent de protéger le mécanisme, notamment la vis, contre les projections accidentelles de salissure.

Dans la pratique, un même type de toupie peut servir pratiquement pour la plupart des produits, qu'il s'agisse de légumes à chair dure tels que carottes, ou de légumes à chair tendre tels que pommes de terre, ou encore de légumes à chair filandreuse tels que navets ou oignons, et également des fruits à pelure mince comme les pommes ou les poires. Du fait qu'aucune adaptation ni qu'aucun calibrage des produits n'est nécessaire, il est donc possible à l'usager d'enchaîner des produits différents, par exemple carottes, pommes de terre, navets, oignons, etc. sans avoir à changer quoi que ce soit à l'appareil. Pour ce qui concerne les fruits à peau épaisse, en particulier les oranges et les citrons, il est possible, comme on l'a vu plus haut, d'utiliser une toupe spéciale dont le dépassement des saillies 2 est plus important. Une autre solution est d'agir sur la vitesse relative de la toupie par rapport à la vitesse de la vis, ce qui est partiulièrement simple dans le case de l'exemple décrit où on dispose de deux moteurs indépendants 3 et 7. Enfin, une dernière solution consiste à recommencer plusieurs fois le cycle d'épluchage sur le même agrume. Cette dernière solution présente en outre l'avantage qu'au premier passage on peut, si on le désire, récupérer, le zeste du fruit dans le réceptacle indiqué ci-dessus, tandis qu'au ou aux passages suivants, on élimine la peau blanche.

Il faut enfin remarquer que, malgré l'absence d'eau dans l'appareil, tous les produits épluchés, fruits ou légumes, sortent du poste d'évacuation parfaitement propres grâce au mode d'épluchage utilisé et n'ont pratiquement pas besoin d'être nettoyés avant utilisation.

**Revendications**

1. Eplucheuse d'un produit (P) tel que fruit ou légume comprenant un outil tournant (T) avec un moyen dd'entraînement en rotation dudit outil tournant (T) et un moyen pour le déplacer relativement au produit de manière à explorer la surface de celui-ci et y tracer des spires parallèles successives, caractérisée par le fait

a) que ledit outil est une toupie (T) comportant une partie de révolution (1) de petit diamètre apte à venir pénétrer dans les parties concaves des formes irrégulières du produit et susceptible de venir au contact de celui ci, et une ou plusieurs dents, tranchantes ou non, formant des saillies (2) d'un dépassement déterminé au-delà de ladite surface de révolution (1), le nombre de dents étant de préférence égal à deux

b) que ledit moyen d'entraînement (3) de la toupie (T) est apte à entraîner celle ci en rotation autour de son axe (AT à grande vitesse de telle manière que la vitesse tangentielle desdites saillies (2) soit supérieure à 8 m/s, et de préférence au moins de 20 m/s, et

c) que ledit moyen d'entraînement (3) est apte à entraîner la toupie (T) dans un sens (S) de rotation relativement au mouvement d'exploration tel que lesdites saillies (2) attaquent la peau du produit par dessous en partant de la spire voisine déjà pelée.

2. Eplucheuse selon la revendication 1, caractérisée par le fait

que l'arbre (A) de la toupie (T) tourne dans les paliers d'un ensemble (4) articulé autour d'un axe perpendiculaire d'articulation (AM) par rapport à une cage (C), elle-même mobile autour d'un axe de cette cage (AC) perpendiculaire au précédent (AM) et de préférence excentré, c'est-à-dire non concourant avec le précédent,

qu'un couple est exercé sur l'ensemble de paliers (4) de la toupie (T) par rapport à la cage (C), de telle manière qui la toupie (T) fonctionne de manière sensitive en exerçant sur le produit (P) un effort trés faible, inférieur à 0,5 N, et de préférence inférieur à 0,3 N,

que le produit (P) est entraîné d'un mouvement hélicoïdal relatif par rapport à l'axe de cage (AC),

enfin, que ladite cage (C) est entraînée autour de son axe (AC), de telle manière qu'en début de cycle d'épluchage, l'axe d'articulation (AM) fasse avec l'axe (AB) du mouvement hélicoïdal relatif un angle initial dans un sens tel que la force de réaction du produit sur la toupie produise la fuite oblique de celle-ci pour l'éloigner dudit axe (AB), et qu'en fin d'opération, ce même axe d'articulation (AM) fasse avec l'axe (AB) du mouvement hélicoïdal relatif, un angle final de sens opposé au précédent.

3. Eplucheuse selon la revendication 2, caractérisée par le fait que ledit angle initial est voisin de 45° et que ledit angle final est voisin de 20°.

4. Eplucheuse selon une des revendications précédentes, caractérisée par le fait que le produit (P) est entraîné dans ledit mouvement relatif à l'aide d'une broche courte (B) acérée et filetée, pénétrant une extrémité du produit à la manière d'un tire-bouchon.

5. Eplucheuse selon la revendication 4, caractérisée par le fait que ladite broche (B) est placée à l'extrémité d'un chariot (10) en forme de bras, son mouvement de translation étant communiqué par une vis (V) qui se visse dans la base du chariot (10), et son mouvement de rotation étant assuré par une transmission appropriée (14) à partir de cette même vis.

6. Eplucheuse selon la revendication 5, caractérisée par le fait que ladite broche peut occuper successivement trois postes distincts (B, $B_1$, $B_2$) dont un poste intermédiaire (B) pour la prise du produit, un poste d'épluchage à l'aplomb de la toupie (T) à une extrémité, et un poste d'évacuation du produit et de retour du chariot à l'autre extrémité, le passage de l'une à l'autre de ces trois positions étant obtenu par le seul effet de la rotation de la vis (V) et l'intervention de butées d'extrémités (16, 17) et d'une butée intermédiaire (18), l'action de cette dernière étant limitée au début de la course de chariot.

7. Eplucheuse selon une des revendications 2 à 6, caractérisée par le fait que le mouvement de rotation de la cage (C) autour de son axe de cage (AC) est assuré par friction et interdit par un doigt de butée (28) solidaire de l'ensemble (4) portant les paliers de l'arbre (A) de la toupie (T) et coopérant avec une butée (31), de manière à n'autoriser le début de mouvement de basculement depuis la position angulaire initiale jusqu'à la position angulaire finale qu'à partir du moment où l'extrémité du produit (P) agissant sur la toupie (T) a produit un déplacement suffisant de l'ensemble (4) dans le sens de la fuite oblique (F) pour que ledit doigt de butée (28) échappe de sa butée (31).

8. Eplucheuse selon la revendication 7, caractérisée par le fait que ledit mouvement de rotation de la cage (C) autour de son axe de cage (AC) est accompagné d'un léger mouvements de recul le long de cet axe à l'aide d'une came (24), de manière à empêcher en fin de cycle d'épluchage l'interférence entre la toupie (T) et la base de la broche (B).

9. Eplucheuse selon une des revendications précédentes, caractérisée par le fait qu'elle comporte une pelle de centrage (33) articulée par rapport au bâti, et comportant un creux (35) centrant la base du produit (P) au-dessus du poste intermédiaire (B), ladite pelle comportant une échancrure (36) pour l'évacuation latérale de la broche du poste intermédiaire (B) vers le poste d'épluchage (B₁).

10. Eplucheuse selon la revendication 9, caractérisée par le fait que la seule action du produit sur la pelle de centrage (33) provoque son basculement qui actionne, par des contacts appropriés, le mouvement de pénétration de la broche (B) dans le produit (P), puis l'arrêt du mouvement, une commande manuelle ultérieure, éventuellement par l'intermédiaire de cette même pelle de centrage (33), produisant la continuation du cycle.

## Patentansprüche

1. Schälmaschine für Produkte (P), wie Obst oder Gemüse, die ein umlaufendes Werkzeug (T) aufweist, mit Antriebsmitteln, um das umlaufende Werkzeug (T) in Umdrehungen zu versetzen, und mit Mitteln, um es gegenüber dem jeweiligen Produkt in der Weise zu bewegen, daß es an dessen Oberfläche entlangfährt und dabei parallele aufeinanderfolgende Windungen einschneidet, dadurch gekennzeichnet,

(a) daß das Werkzeug ein Fräswerkzeug (T) ist, das einen rotierenden, einen kleinen Durchmesser aufweisenden Bereich (1) umfaßt, der geeignet ist, in die vertieften Abschnitte der unregelmäßigen Formen der Produkte einzudringen, und der in der Lage ist, mit diesen in Berührung zu kommen, und das einen oder mehrere schneidende oder nichtschneidende Zähne aufweist, die deutlich über die rotierende Fläche (1) vorstehende Vorsprünge (2) bilden, wobei die Zahl der Zähne vorzugsweise gleich zwei ist,

(b) daß die Antriebsmittel (3) des Fräswerkzeuges (T) geeignet sind, dieses mit so großer Geschwindigkeit um seine Achse (AT) rotierend anzutreiben, daß die Tangentialgeschwindigkeit der Vorsprünge (2) größer als 8 m/sec ist und vorzugsweise wenigstens 20 m/sec beträgt, und

(c) daß die Antriebsmittel (3) dazu eingerichtet sind, das Fräswerkzeug (T) in einer Drehrichtung (S) relativ zu der Abfahrbewegung anzutreiben, so daß die Vorsprünge (2) beim Verlassen der bereits geschälten benachbarten Windung von unten her auf die Schale des jeweiligen Produktes einwirken.

2. Schälmaschine nach Anspruch 1, dadurch gekennzeichnet, daß

sich die Welle (A) des Fräswerkzeuges (T) in den Lagern einer Vorrichtung (4) dreht, die um eine, bezogen auf ein Gehäuse (C) senkrechte Schwenkachse (AM) schwenkbar ist, welches selbst um eine Gehäuseachse (AC) beweglich ist, die rechtwinklig und vorzugsweise versetzt zu der vorhergehenden Achse (AM) verläuft, d.h. keinen Kreuzungspunkt mit dieser aufweist,

daß, bezogen auf das Gehäuse (C) ein Moment auf die Lagervorrichtung (4) des Fräswerkzeuges (T) ausgeübt wird, derart, daß das Fräswerkzeug (T) leicht anspricht, indem es auf das jeweilige Produkt (P) eine sehr geringe Kraft unterhalb von 0,5 N und vorzugsweise unterhalb von 0,3 N ausübt,

daß das jeweilige Produkt (P), bezogen auf die Gehäuseachse (AC) in einer spiralförmigen Bewegung angetrieben ist, und

daß das Gehäuse (C) bezüglich seiner Achse (AC) derart angetrieben ist, daß zu Beginn eines Schälzyklus die Schwenkachse (AM) mit der Achse (AB) der spiralförmigen Relativbewegung einen Ausgangswinkel mit einer Richtung einschließt, derart, daß die Reaktionskraft des jeweiligen Produktes auf das Fräswerkzeug eine schräge Ausweichbewegung desselben erzeugt, um es von der Achse (AB) wegzubewegen, und daß am Ende des Zyklus die Schwenkachse (AM) mit der Achse (AB) der spiralförmigen Relativbewegung einen Endwinkel in einer zu der vorhergehenden entgegengesetzten Richtung einschließt.

3. Schälmaschine nach Anspruch 2, dadurch gekennzeichnet, daß der Ausgangswinkel ungefähr 45° und der Endwinkel ungefähr 20° betragen.

4. Schälmaschine nach einem der vorhergehenden Ansprüche, dadurch gekennzeichnet, daß das jeweilige Produkt (P) für die Relativbewegung mit Hilfe einer scharfen und mit Gewinde versehenen kurzen Spindel (B) angetrieben ist, die nach Art eines Korkenziehers in ein Ende des Produktes eingedrungen ist.

5. Schälmaschine nach Anspruch 4, dadurch gekennzeichnet, daß die Spindel (B) an dem äußeren Ende eines die Form eines Auslegers aufweisenden Halters (10) angeordnet ist, dessen Translationsbewegung über eine Schraube (V) bewirkbar ist, die sich durch die Basis des Halters (10) schraubt, und dessen Drehbewegung von derselben Schraube über geeignete Getriebemittel (14) sichergestellt ist.

6. Schälmaschine nach Anspruch 5, dadurch gekennzeichnet, daß die Spindel nacheinander drei unterschiedliche Positionen (B, B₁, B₂) einnehmen kann, zu denen eine Zwischenposition (B) zur Aufnahme des jeweiligen Produktes, eine Schälposition im Lot bezüglich des Fräswerkzeugs (T) als eine äußere Position und eine Position zur Entnahme des Produktes und zur Rückkehr des Halters in die andere äußere Position gehören, wobei der Übergang von einer dieser drei Positionen zu einer anderen lediglich durch die Drehung der Schraube (V) sowie das Einwirken von Endanschlägen (16, 17) und einem Zwischenanschlag (18) erzielt wird und die Wirkung des letzteren auf den Beginn des Weges des Halters beschränkt ist.

7. Schälmaschine nach einem der Ansprüche 2 bis 6, dadurch gekennzeichnet, daß die Drehbewegung des Gehäuses (C) um seine Gehäuseachse (AC) durch Reibschluß bewirkt und durch einen Anschlagzapfen (28) begrenzt ist, der einstückig mit der Lagervorrichtung (4) verbunden ist, die die Lager der Welle (A) des Fräswerkzeuges (T) trägt, und derart mit einem Anschlag (31) zusammenwirkt, daß der Beginn der Schwenkbewegung aus der Stellung mit dem Ausgangswinkel in die Stellung mit dem Endwinkel solange nicht möglich ist, bis das Ende des jeweiligen Produktes (P) auf das Fräswerkzeug (T) einwirkt, um eine ausreichende Auslenkung der Lagervorrichtung (4) in Richtung der schrägen Ausweichbewegung (F) zu bewirken, damit der Anschlagzapfen (28) von seinem Anschlag (31) freikommt.

8. Schälmaschine nach Anspruch 7, dadurch gekennzeichnet, daß die Drehbewegung des Gehäuses (C) um seine Gehäuseachse (AC) von einer leichten Rückbewegung entlang dieser Achse mit Hilfe einer Nocke (24) begleitet ist, um zu verhindern, daß am Ende des Schälzyklus ein Zusammenstoßen zwischen dem Fräswerkzeug (T) und der Basis der Spindel (B) auftritt.

9. Schälmaschine nach einem der vorhergehenden Ansprüche, dadurch gekennzeichnet, daß sie einen an dem Rahmen angelenkten Ausrichtlöffel (34) umfaßt, der eine Vertiefung (35) aufweist, die das untere Ende eines Produktes (P) oberhalb der Zwischenposition (B) ausrichtet, wobei der Löffel zum seitlichen Verschwenken der Spindel aus der Zwischenposition (B) in die Schälposition (B₁) einen bogenförmigen Ausschnitt (36) aufweist.

10. Schälmaschine nach Anspruch 9, dadurch gekennzeichnet, daß allein das Einwirken des Produktes auf den Austrichtlöffel (33) dessen Kippbewegung einleitet, die über geeignete Kontakte die Eindringbewegung der Welle (B) in das Produkt (P) in Gang setzt, wobei nach dem Abschluß dieser Bewegung ein späterer manueller, möglicherweise über denselben Ausrichtlöffel (33) einzugebender Befehl die Fortsetzung des Zyklus bewirkt.

**Claims**

1. Peeler for a product (P) such as a fruit or vegetable, comprising a rotating tool (T) with means for causing said rotating tool (T) to rotate, and means for moving it relatively to the product so as to explore the surface of the latter and to trace successive parallel spirals on it, characterised in that

a) said tool is a milled cutter (T) comprising a rotating portion (1) of small diameter suitable for penetrating the concave portions of the irregular shapes of the product and capable of coming into contact with the latter, and one or several teeth, cutting or non-cutting, forming projections (2) of a predetermined excess beyond said rotating surface (1), the number of teeth preferably being equal to two,

b) in that said entrainment means (3) of the milled cutter (T) is suitable for causing the latter to rotate at great speed about its axis (AT) so that the tangential speed of said projections (2) is over 8 m/s, and preferably less than 20 m/s, and

c) in that said entrainment means (3) is suitable for causing the cutter (T) to rotate in a direction (S) of rotation relatively to the exploration movement such that said projections (2) bite into the product under the skin starting from the already peeled adjacent spiral.

2. Peeler according to claim 1, characterised in that

the shaft (A) of the cutter (T) rotates in the bearings of a unit (4) articulated about a perpendicular articulation axis (AM) with respect to a housing (C), in turn movable about an axis of this housing (AC) perpendicular to the former (AM) and preferably eccentric, i.e. not convergent with the former,

torque is exerted on the bearing unit (4) of the milled cutter (T) with respect to the housing (C) so that the cutter (T) functions in a sensitive manner exerting on the product (P) a very weak force, less than 0.5 N, and preferably less than 0.3 N,

the product (P) is entrained by the relative helical movement with respect to the housing axis (AC),

finally, said housing (C) is entrained about its axis (AC) so that at the beginning of the peeling cycle the axis of articulation (AM), with the axis (AB) of the relative helical movement, makes an initial angle in a direction such that the reaction force of the product on the cutter produces an oblique escape of the latter to distance it from said axis (B), and that at the end of the operation this same axis of articulation (AM), with the axis (AB) of the relative helical movement, makes a final angle of opposite direction to the former.

3. Peeler according to claim 2, characterised in that said initial angle is close to 45° and said final angle is close to 20°.

4. Peeler according to one of the preceding claims, characterised in that the product (P) is entrained into said relative movement with the aid of a short sharp and threaded spindle (B), penetrating one end of the product in the manner of a corkscrew.

5. Peeler according to claim 4, characterised in that said spindle (B) is placed at the end of an arm-shaped carrier (10), its translatory movement being communicated by a screw (V) which is screwed in the base of the carrier (10), and its rotary movement being ensured by an appropriate transmission (14) from this same screw.

6. Peeler according to claim 5, characterised in that said spindle can successively occupy three distinct positions (B, B₁, B₂), an intermediary position (B) for holding the product, a peeling position perpendicular to the cutter (T) at one end, and a position for discharge of the product and return of the carrier at the other end, the passage from one to the other of these three positions being obtained by the single action of turning the screw (V) and the intervention of end stops (16, 17) and of an intermediary stop (18), the action of the latter being limited to the beginning of the travel of the carrier.

7. Peeler according to one of claims 2 to 6, characterised in that the rotary movement of the housing (C) about its housing axis (AC) is ensured by friction and prevented by a stop finger (28) integral with the unit (4) carrying the bearings of the shaft (A) of the cutter (T) and cooperating with a stop (31) so as to allow the beginning of the swinging movement from the initial angle position to the final angle position only from the moment when the end of the product (P) acting on the cutter (T) has produced sufficient movement of the unit (4) in the direction of the oblique escape (F) so that said stop finger (28) escapes from its stop (31).

8. Peeler according to claim 7, characterised in that said rotary movement of the housing (C) about its housing axis (AC) is accompanied by a slight withdrawal movement along this axis with the aid of a cam (24) so as to prevent interference between the cutter (T) and the base of the spindle (B) at the end of the peeling cycle.

9. Peeler according to one of the preceding claims, characterised in that it comprises a centring pan (33) articulated with respect to the frame, and comprising a hollow (35) centring the base of the product (P) above the intermediary position (B), said pan comprising an indentation (36) for the lateral evacuation of the spindle from the intermediary position (B) towards the peeling position (B₁).

10. Peeler according to claim 9, characterised in that the single action of the product on the centring pan (33) causes it to swing which, by appropriate contacts, actuates the penetration movement of the spindle (B) into the product (P), then the stopping of the movement, with a subsequent manual control, possibly by means of this same centering pan (33), producing the continuation of the cycle.

# FIG.1

## FIG.2

# FIG.3

## FIG.4

FIG.5

FIG.6